# EUROPÄISCHE PATENTANMELDUNG

(11) **EP 2 374 769 A1**
(43) Veröffentlichungstag der Anmeldung: **12.10.2011**
(21) Anmeldenummer: 10401051.7
(22) Anmeldetag: 12.04.2010
(51) Int. Cl.: C04B 28/02

(54) **Zuschlagstoff für die Ausbildung einer Schallabtsorptionsschicht einer Lärmschutzeinrichtung und Lärmschutzeinrichtung**

(71) Anmelder: Betonwerk Schuster GmbH, 02733 Cunewalde (DE)
(72) Erfinder: Gelbrich, Sandra, 09648 Altmittweida (DE); Unger, Christoph, 09120 Chemnitz (DE); Nendel, Wolfgang, 09569 Oederan (DE)
(74) Vertreter: Steiniger, Carmen

(57) **Zusammenfassung**

Die Erfindung betrifft einen Zuschlagstoff für die Ausbildung einer Schallabsorptionsschicht einer Lärmschutzeinrichtung, wobei der Zuschlagstoff aus einem hochpolymeren, elastischen, oberflächenmineralisierten Material ausgebildet ist. Die vorliegende Erfindung betrifft ferner eine Lärmschutzeinrichtung mit einer aus bewehrtem oder unbewehrtem Beton ausgebildeten Tragschicht, wobei auf der Tragschicht wenigstens eine Schallabsorptionsschicht vorgesehen ist, und wobei die Schallabsorptionsschicht aus wenigstens einem mineralischen Bindemittel, mineralischen Zuschlägen und einem Zuschlagstoff aus einem hochpolymeren, elastischen, oberflächenmineralisierten Material ausgebildet ist. Es ist die Aufgabe der vorliegenden Erfindung, einen Zuschlagstoff für die Ausbildung einer Schallabsorptionsschicht einer Lärmschutzeinrichtung sowie eine entsprechende Lärmschutzeinrichtung mit sehr guten Schallabsorptions- und Schalldämmeigenschaften zur Verfügung zu stellen, welche mit einfachen Mitteln kostengünstig und schnell herstellbar sind, und wobei die Lärmschutzeinrichtung eine hohe Lebensdauer und Haftverbundfestigkeit aufweist. Die Aufgabe wird einerseits durch einen Zuschlagstoff der oben genannten Gattung gelöst, wobei der Zuschlagstoff aus einem Gummigranulat ausgebildet ist, auf dem direkt eine das Gummigranulat umhüllende Hüllschicht, die aus einem polymeren Bindemittel ausgebildet ist, das aus der Gruppe der Acrylatharze, einem polyurethan- oder epoxidhaltigen Bindemittel oder einer Mischung daraus ausgewählt ist, und eine auf der Hüllschicht vorgesehene mineralische Beschichtung vorgesehen ist, wobei die mineralische Beschichtung ein nicht in einer chemischen Reaktion mit wasseraushärtendes Gesteinsmehl mit einer Korngröße im µm-Bereich ist, das während des Erhärtens der Hüllschicht an diese angebunden ist. Die Aufgabe wird ferner durch eine Lärmschutzeinrichtung mit einem erfindungsgemäßen Zuschlagstoff gelöst.

## Beschreibung

Die Erfindung betrifft einen Zuschlagstoff für die Ausbildung einer Schallabsorptionsschicht einer Lärmschutzeinrichtung, wobei der Zuschlagstoff aus einem hochpolymeren, elastischen, oberflächenmineralisierten Material ausgebildet ist. Die vorliegende Erfindung betrifft ferner eine Lärmschutzeinrichtung mit einer aus bewehrtem oder unbewehrtem Beton ausgebildeten Tragschicht, wobei auf der Tragschicht wenigstens eine Schallabsorptionsschicht vorgesehen ist, und wobei die Schallabsorptionsschicht aus wenigstens einem mineralischen Bindemittel, mineralischen Zuschlägen und einem Zuschlagstoff aus einem hochpolymeren, elastischen, oberflächenmineralisierten Material ausgebildet ist.

Eine Lärmschutzeinrichtung und ein Zuschlagstoff der oben genannten Gattung sind aus der Druckschrift DE 198 04 770 A1 bekannt. Die Druckschrift beschreibt eine Lärmschutzwand, die aus zwei Schichten oder Schalen aufgebaut ist, wobei eine Schicht eine Tragschale aus Schwerbeton ist, die die statischen Erfordernisse der Lärmschutzwand erfüllt, während die andere Schicht eine Absorptionsschicht aus einem schalldämmenden und schallabsorbierenden Beton ist. Die Absorptionsschicht hat die Funktion einer der Schallquelle zugewandten Vorsatzschale und ist im Wesentlichen aus einem mit einem hochpolymeren Zuschlagstoff versetzten Beton ausgebildet.

Für die Herstellung der hochpolymeren Zuschlagstoffe verweist die Druckschrift einerseits auf die Druckschrift WO 93/16009, gemäß welcher zerkleinerte unsortierte Materialien und Materialschnipsel der Kunststoff-, Textil-, Leder- und Kunstlederindustrie einer schockartigen Wärmestrahlung ausgesetzt werden, um diese zu innertisieren und zu aktivieren, bevor sie mit kristallbildenden wässrigen Lösungen von mineralischen Bindemitteln in einer fotochemischen Behandlung gemischt werden. Hierzu wird darauf verwiesen, dass die bunte Optik sowie das ökonomisch aufwendige Verfahren zur Herstellung derartiger hochpolymerer Zuschlagstoffe nachteilig sind.

Als Alternative zur Herstellung der hochpolymeren Zuschlagstoffe wird das in der Druckschrift DE 1 96 32 446.7 beschriebene Verfahren angegeben. Hier werden grob vorzerkleinerte hochpolymere Wertstoffe, insbesondere Textil- und Kunststoffabfälle der Industrie, der Haushalte und des Handels, in einem Agglomerator thermisch aufbereitet, innertisiert und im Agglomerator verbleibend mit einer kristallbildenden wässrigen Mineralisierungslösung mindestens einmal geschockt, wobei die Menge der zugeführten Mineralisierungslösung so dosiert werden muss, dass diese den Erfordernissen des Schockens und der Mineralisierung entspricht. Dabei kann es notwendig sein, gegebenenfalls mehrmalig Mineralisierungslösung innerhalb bzw. außerhalb des Agglomerators hinzuzugeben, um eine ausreichende Mineralisierung des Agglomerates zu erreichen. Somit ist auch dieses Verfahren dann, wenn einen ausreichende Menge an mineralisierten Kristallen mit der erforderlichen Haftung auf der Oberfläche des Agglomerates vorliegen soll, relativ aufwendig.

Bei den in der Druckschrift DE 198 04 770 A1 empfohlenen hochpolymeren Zuschlagstoffen ist es unbedingt erforderlich, dass diese rundum von einem gut haftenden mineralischen Material umgeben sind. Nur dann kann eine vorteilhafte Einbindung dieser Zuschlagstoffe in den Beton der Absorptionsschicht erfolgen, da Erfahrungen zeigen, dass sich unbehandelte hochpolymere Zuschlagstoffe mit der Zeit aus einem Materialverbund, der Beton enthält, lösen, so dass derartige Verbundstoffe nicht die entsprechende Lebensdauer und Haftverbundfestigkeit aufweisen.

Ferner ist es aus der Druckschrift EP 1 868 955 D1 bekannt, die Oberfläche von auf Basis von Elastomeren ausgebildeten Granulaten derart zu verändern, dass auf dieser Oberfläche ein hydraulisches Bindemittel, wie Zement, besser haftet. Da für die Ausbildung einer Betonhülle um das Granulat eine Reaktion zwischen Zement und Wasser notwendig ist, wird auf das Granulat zunächst ein Tensid aufgebracht, welches die Ausbildung eines Wasserfilms auf dem Granulat ermöglicht. Nachfolgend wird auf das so vorbehandelte Granulat ein wasserlösliches Polymerharz als zweite Schicht aufgebracht. Schließlich wird auf diese feuchte Oberfläche ein hydraulisches Bindemittel, wie Zement, aufgebracht, wobei der Zement in einer chemischen Reaktion mit dem Wasser aushärtet. Bei diesem Herstellungsverfahren ist es sehr wichtig, die prozentualen Zusätze von Tensid, Polymerharz und Zement genau aufeinander abzustimmen. Ferner erfordert das Verfahren eine genaue Abstimmung dahingehend, wann die einzelnen Zusätze auf das Granulat aufgebracht werden dürfen. Ein wesentlicher Nachteil der bekannten Technologie ist jedoch, dass durch das erforderliche Aushärten des Zementes selbst dann, wenn Schnellzement verwendet wird, bis zu vier Tage vergehen, bevor der Zement auf dem Granulat gehärtet ist. Selbst nach Ablauf der vier Tage ist noch nicht davon auszugehen, dass der Zement seine endgültige Festigkeit erreicht hat.

Es ist daher die Aufgabe der vorliegenden Erfindung, einen Zuschlagstoff für die Ausbildung einer Schallabsorptionsschicht einer Lärmschutzeinrichtung sowie eine entsprechende Lärmschutzeinrichtung mit sehr guten Schallabsorptions- und Schalldämmeigenschaften zur Verfügung zu stellen, welche mit einfachen Mitteln kostengünstig und schnell herstellbar sind, und wobei die Lärmschutzeinrichtung eine hohe Lebensdauer und Haftverbundfestigkeit aufweist.

Die Aufgabe wird einerseits durch einen Zuschlagstoff der oben genannten Gattung gelöst, wobei der Zuschlagstoff aus einem Gummigranulat ausgebildet ist, auf dem direkt eine das Gummigranulat umhüllende Hüllschicht, die aus einem polymeren Bindemittel ausgebildet ist, das aus der Gruppe der Acrylatharze, einem polyurethan- oder epoxidhaltigen Bindemittel oder einer Mischung daraus ausgewählt ist, und eine auf der Hüllschicht vorgesehene mineralische Beschichtung vorgesehen ist, wobei die mineralische Beschichtung ein nicht in einer chemischen Reaktion mit Wasser aushärtendes Gesteinsmehl mit einer Korngröße im µm-Bereich ist, das während des Erhärtens der Hüllschicht an diese angebunden ist.

Die Aufgabe wird ferner durch eine Lärmschutzeinrichtung mit einer Schallabsorptionsschicht der oben genannten Gattung gelöst, wobei der Zuschlagstoff aus einem Gummigranulat ausgebildet ist, auf dem direkt eine das Gummigranulat umhüllende Hüllschicht, die aus einem polymeren Bindemittel ausgebildet ist, das aus der Gruppe der Acrylatharze, einem polyurethan- oder epoxidhaltigen Bindemittel oder einer Mischung daraus ausgewählt ist, und eine auf der Hüllschicht vorgesehene mineralische Beschichtung vorgesehen ist, wobei die mineralische Beschichtung ein nicht in einer chemischen Reaktion mit Wasser aushärtendes Gesteinsmehl mit einer Korngröße im µm-Bereich ist, das während des Erhärtens der Hüllschicht an diese angebunden ist.

In der vorliegenden Erfindung wird das Material der Hüllschicht direkt auf das Gummigranulat aufgebracht. Das heißt, es ist keine Zwischenbeschichtung des Gummigranulates, wie beispielsweise in der Druckschrift EP 1 868 955 D1, in welcher das Granulat vorerst mit einem Tensid behandelt wird, vorgesehen. Dies ist in der vorliegenden Erfindung auch gar nicht notwendig, da es hier nicht erforderlich ist, einen Wasserfilm auf dem Gummigranulat auszubilden.

Die erfindungsgemäß vorgesehene, das Gummigranulat umhüllende Hüllschicht schafft einerseits eine gute Anbindung an das Gummigranulat und stellt andererseits eine optimale Grundlage für die aufzubringende mineralische Beschichtung zur Verfügung. So kann die Hüllschicht in zunächst flüssiger Form gut mit dem Gummigranulat durchmischt werden, wobei das Gummigranulat allseitig durch das Material der elastischen Hüllschicht benetzt werden kann. Daraufhin kann dann, wenn eine Erhärtungsreaktion des Materials der Hüllschicht stattfindet, das Gesteinsmehl als Material für die vorgesehene mineralische Beschichtung auf das von dem Material der Hüllschicht eingehüllte Gummigranulat gegeben werden, wodurch die mineralische Beschichtung besonders gut auf der darunter befindlichen Hüllschicht haftet bzw. an diese adhäsiv angebunden wird oder auch zumindest teilweise in diese eingebunden wird, ohne mit dem Material der Hüllschicht zu reagieren.

Die elastische Hüllschicht ist aus einem polymeren Bindemittel ausgebildet, das aus der Gruppe der Acrylatharze, einem polyurethan- oder epoxidhaltigen Bindemittel oder einer Mischung daraus ausgewählt ist. Diese Materialien sind besonders gut geeignet, um einen elastischen Schichtüberzug über das Gummigranulat herzustellen, wobei sich die angegebenen Materialien besonders gut mit dem Gummigranulat verbinden, sodass eine gute Haltbarkeit der elastischen Hüllschicht auf dem Gummigranulat gewährleistet ist.

Die mineralische Beschichtung ist erfindungsgemäß ein Gesteinsmehl mit einer Korngröße im µm-Bereich. Die Mikrobeschichtung mit Gesteinsmehl erlaubt eine gute Haftung des Gesteinsmehls an der elastischen Hüllschicht und damit eine gute Umhüllung des Gummigranulats durch das Gesteinsmehl.

Im Gegensatz zu Zement, der infolge einer Hydratation, das heißt einer chemischmineralogischen Reaktion zwischen Zement und Wasser zu Beton reagiert und hierdurch erstarrt, wird in der vorliegenden Erfindung als mineralische Beschichtung des Zuschlagstoffes Gesteinsmehl verwendet. Das Gesteinsmehl kann direkt in das Material der Hüllschicht eingebunden werden. Eine chemische Reaktion mit Wasser ist hierfür nicht erforderlich. Das heißt, obwohl in der Technologie zur Herstellung des erfindungsgemäßen Zuschlagstoffes durchaus Wasser verwendet werden kann, ist Wasser für das Ausbilden der mineralischen Beschichtung auf dem Zuschlagstoff nicht unbedingt erforderlich. Da erfindungsgemäß keine chemische Reaktion zwischen Wasser und dem Beschichtungsmaterial des Zuschlagstoffes erforderlich ist, ist der Zuschlagstoff bereits dann fertig und weiterverwendbar, wenn das Material der Hüllschicht, an welcher das Gesteinsmehl angelagert ist, ausgehärtet ist. Diese Aushärtung kann in Abhängigkeit von dem Material der verwendeten Hüllschicht sehr schnell realisiert werden, sodass der erfindungsgemäße Zuschlagstoff in rascher Folge für die Weiterverarbeitung verwendet werden kann.

Im Ergebnis kann mit gegenüber dem Stand der Technik deutlich verringertem technologischen und zeitlichen Aufwand ein Zuschlagstoff aus einem hochpolymeren, elastischen Material mit einer hoch haftfesten Oberflächenmineralisierung zur Verfügung gestellt werden, welcher sich aufgrund der hochqualitativen mineralisierten Oberfläche sehr gut in den das wenigstens eine mineralische Bindemittel und die mineralischen Zuschläge enthaltenden Materialverbund der Schallabsorptionsschicht einfügt. Insbesondere geht das erfindungsgemäß mit der elastischen Hüllschicht und dem Gesteinsmehl beschichtete Gummigranulat eine gute Verbindung mit Beton ein, wodurch die ausgebildete Schallabsorptionsschicht eine sehr geringe Neigung zur Rissbildung, eine hohe Dauerhaftigkeit und sehr gute Haftverbundfestigkeit aufweist. Ferner zeigt die mit dem erfindungsgemäßen Zuschlagstoff versetzte Schallabsorptionsschicht einen hohen Widerstand gegen Frost-Taumittel-Beanspruchung, einen hohen Anprallschutz durch die Elastizität des eingebrachten Gummis, eine hohe Stoßdämpfung und Steinwurfresistenz, eine sehr gute Schalldämmung und eine gute Schallabsorption. Darüber hinaus können durch die mit dem erfindungsgemäßen Zuschlagstoff versehene Schallabsorptionsschicht temperaturbedingte Spannungen im Beton durch die Elastizität des Zuschlagstoffes ausgeglichen werden.

Entsprechend kann eine Lärmschutzeinrichtung, wie beispielsweise ein Lärmschutzwandsystem, mit einer sehr gut schallabsorbierenden und zugleich dämmenden Schallabsorptionsschicht zur Verfügung gestellt werden.

Gemäß einer vorteilhaften Ausführungsform der vorliegenden Erfindung ist das Gummigranulat aus recycelten Altreifen ausgebildet. Auf diese Weise können Altreifen in zerkleinerter Form umweltgerecht wiederverwendet werden, wobei das aus recycelten Altreifen hergestellte Gummigranulat besonders gute elastische Eigenschaften im Sinne der Erfindung aufweist.

Hierbei ist es besonders günstig, wenn die Altreifen Lkw-Altreifen sind. Lkw-Reifen sind aus einem qualitativ höheren Material als die Reifen von Pkw's ausgebildet, wodurch das Gummigranulat in höherer Qualität zur Verfügung gestellt werden kann.

Entsprechend einer vorteilhaften Ausführungsform der vorliegenden Erfindung weist das Gummigranulat eine durchschnittliche Korngröße von etwa 2 mm bis etwa 7 mm auf. Diese Korngröße garantiert einerseits eine gute Einbindung in das mineralische Bindemittel der Schallabsorptionsschicht, wobei die Korngröße ausreichend groß ist, um die elastischen Eigenschaften des Gummigranulates vorteilhaft in dem Bindemittel wirksam werden zu lassen.

Es hat sich als besonders vorteilhaft erwiesen, wenn die elastische Hüllschicht eine Schichtdicke von etwa 50 µm bis etwa 200 µm aufweist. Diese Schichtdicke gewährleistet einerseits eine gute Umhüllung des Gummigranulats durch die elastische Hüllschicht und andererseits eine gute Anbindung des Gesteinsmehls an die elastische Hüllschicht während der Vernetzungsreaktion des Materials der elastischen Hüllschicht.

Gemäß einem günstigen Beispiel der Erfindung umfassen die mineralischen Zuschläge Kies und/oder Sand in Korngrößen bis etwa 4 mm und/oder Leichtzuschläge. Durch die Auswahl und Menge der vorgesehenen mineralischen Zuschläge können die Eigenschaften der Schallabsorptionsschicht, wie deren Haftverbundfestigkeit und Dauerhaftigkeit, vorteilhaft beeinflusst werden.

Vorzugsweise ist das verwendete mineralische Bindemittel, das zur Ausbildung der Schallabsorptionsschicht eingesetzt wird, Zement. Somit ist das Grundmaterial der Schallabsorptionsschicht Beton, was eine gute Anbindung der Schallabsorptionsschicht an die Tragschicht und deren Herstellung in einer Nass-in-nass-Technologie ermöglicht.

Gemäß einer vorteilhaften Weiterbildung der Erfindung sind in der Schallabsorptionsschicht textile Fasern vorgesehen. Die textilen Fasern können als Kurz-, Lang- oder Endlosfasern oder in Form von einem Gewebe oder Gewirke in die Schallabsorptionsschicht eingebunden werden. Die vorgesehenen textilen Fasern führen zu einer Erhöhung der Biegezugfestigkeit der Schallabsorptionsschicht.

In einer weiteren vorteilhaften Ausführungsvariante der Erfindung sind beidseitig der Tragschicht Schallabsorptionsschichten vorgesehen. Somit kann ein Lärmschutzelement mit einem Dreischichtaufbau zur Verfügung gestellt werden, bei welchem jede Seite des Lärmschutzelementes schallabsorbierende und sogleich dämmende Eigenschaften aufweist.

In einem weiteren günstigen Ausführungsbeispiel der Erfindung weist die Schallabsorptionsschicht eine profilierte Oberfläche auf. Dabei kann die Oberfläche beispielweise ein trapezförmiges oder wellenförmiges Profil aufweisen. Durch den Einsatz derartig profilierter Oberflächen können die Schallabsorptions- und Schalldämmeigenschaften der Schallabsorptionsschicht und damit der Lärmschutzeinrichtung weiter erhöht werden.

Vorteilhafte Ausführungsformen der vorliegenden Erfindung, deren Funktion, Aufbau und Eigenschaften, werden im Folgenden anhand der Figuren der Zeichnung näher erläutert, wobei
- Figur 1: schematisch im Querschnitt einen Grundaufbau eines Partikels eines erfindungsgemäß vorgesehenen, mehrfach schichtüberzogenen Zuschlagstoffes zeigt;
- Figur 2: schematisch eine mögliche Ausführungsform der erfindungsgemäßen Lärmschutzeinrichtung in einer geschnittenen Seitenansicht zeigt;
- Figur 3: schematisch die Schallabsorptionsschicht der erfindungsgemäßen Lärmschutzeinrichtung aus Fig. 2 in einer perspektivischen Ansicht zeigt; und
- Figur 4: schematisch eine weitere mögliche Ausführungsform einer erfindungsgemäßen Lärmschutzeinrichtung mit beidseitig vorgesehenen Schallabsorptionsschichten in einer perspektivischen Ansicht zeigt.

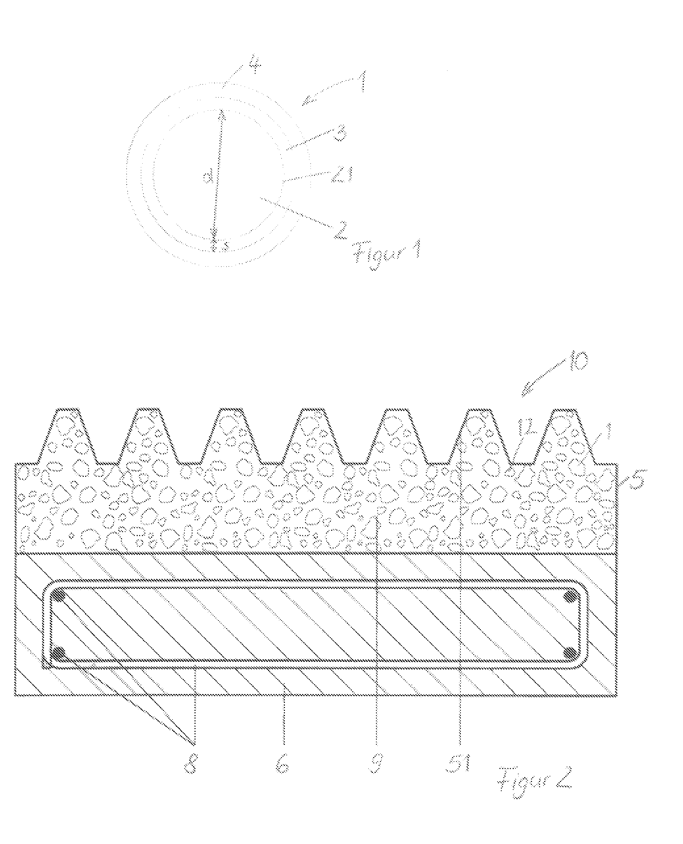

Fig. 1 zeigt schematisch im Querschnitt einen Partikel eines erfindungsgemäß vorgesehenen, mehrfach schichtüberzogenen Zuschlagstoffes 1. Der gezeigte Partikel des Zuschlagstoffes 1 weist innen ein Korn aus einem hochpolymeren elastischen Material auf. In dem in Fig. 1 gezeigten Beispiel ist das hochpolymere elastische Material ein elastisches Gummigranulat 2, das aus recycelten Altreifen, vorzugsweise Lkw-Altreifen, hergestellt ist. Ein derartiges Gummigranulat kann beispielsweise durch Zerkleinerung von Altreifen in einem Warm mahl extruder hergestellt werden. Das Gummigranulat 2 weist eine durchschnittliche Korngröße d von etwa 2 mm bis etwa 7 mm auf.

Direkt um das Korn des Gummigranulats 2 ist eine Umhüllung aus einer Hüllschicht 3 vorgesehen. Zwischen dem Gummigranulat 2 und der Hüllschicht 3 ist keine Zwischen-oder Hilfsschicht vorgesehen. In dem in Fig. 1 gezeigten Ausführungsbeispiel ist die Hüllschicht 3 aus Polyurethan ausgebildet. In anderen, nicht gezeigten Ausführungsvarianten der Erfindung kann die Hüllschicht 3 auch aus einem anderen polymeren Bindemittel, wie einem Bindemittel aus der Gruppe der Acrylatharze, einem polyurethan- oder epoxidhaltigen Bindemittel oder einer Mischung daraus ausgewählt sein, wodurch die Hüllschicht 3 elastische Eigenschaften aufweist. Das Material der Hüllschicht 3 kann somit wasserlöslich sein, muss es aber, wie beispielsweise bei Verwendung eines epoxidhaltigen Bindemittels, nicht sein. Die elastische Hüllschicht 3 weist in dem gezeigten Beispiel eine Schichtdicke von etwa 50 µm bis etwa 200 µm auf. In anderen, nicht gezeigten Ausführungsformen der vorliegenden Erfindung kann die elastische Hüllschicht 3 auch eine andere Dicke besitzen. Die elastische Hüllschicht 3 ist fest an die Oberfläche 21 des Korns aus Gummigranulat 2 angebunden.

Um die elastische Hüllschicht 3 weist der Zuschlagstoff 1 eine mineralische Beschichtung 4 aus einem Gesteinsmehl mit einer Korngröße im µm-Bereich auf. Die mineralische Beschichtung 4 ist fest an die elastische Hüllschicht 3 gebunden. Die Anbindung erfolgt während des Aushärtens des Materials der zunächst in flüssiger Form auf das Gummigranulat 2 aufgebrachten Hüllschicht 3. Eine chemisch-mineralogische Reaktion des Gesteinsmehls mit Wasser findet bei dieser Anbindung nicht statt. Das Gesteinsmehl lagert sich vielmehr adhäsiv an das Material der Hüllschicht 3 an und/oder dringt teilweise in die Hüllschicht 3 ein und bildet somit eine Oberflächenmineralisierung auf dem Zuschlagstoff 1 aus.

Der Zuschlagstoff 1 kann durch seine mineralische Umhüllung besonders gut in ein mineralisches Bindemittel, wie Beton, eingebunden werden, wodurch die elastischen Eigenschaften des in dem Zuschlagstoff 1 befindlichen Gummigranulats 2 vorteilhaft in eine das mineralische Bindemittel bzw. Beton enthaltende Schicht eingebunden werden können. Somit eignet sich der Zuschlagstoff 1 insbesondere für eine Einbindung in eine Schallabsorptionsschicht 5, 7, wie sie beispielsweise in den nachfolgend beschriebenen Fig. 2, 3 und 4 gezeigt ist.

Fig. 2 zeigt schematisch in einer geschnittenen Seitenansicht einen möglichen Aufbau einer Lärmschutzeinrichtung 10. Die Lärmschutzeinrichtung 10 von Fig. 2 ist als Lärmschutzwandsystem mit einer Tragschicht 6 und einer darauf vorgesehenen Schallabsorptionsschicht 5 ausgebildet.

Die Tragschicht 6 ist in dem in Fig. 2 gezeigten Beispiel eine Betonschicht mit Abstandshaltern und einer Bewehrung 8. In anderen, nicht gezeigten Ausführungsbeispielen der vorliegenden Erfindung kann die Tragschicht 6 auch eine unbewehrte Betonschicht in Abhängigkeit der statisch-konstruktiven Erfordernisse sein.

Auf die Schallabsorptionsschicht 5 ist die Tragschicht 6 vorzugsweise in einer Nass-in-nass-Technologie aufgebracht. Die Schallabsorptionsschicht 5 ist aus wenigstens einem mineralischen Bindemittel, wie beispielsweise Beton 9 ausbildendendem Zement, mineralischen Zuschlägen 12 und dem in der Fig. 1 schematisch gezeigten Zuschlagstoff 1 aus einem hochpolymeren, mit einer elastischen Hüllschicht 3 und einer Oberflächenmineralisierung 4 vorgesehenen Material ausgebildet.

Die mineralischen Zuschläge 12 können Normalzuschläge, wie Kies und/oder Sand, in Korngrößen von 0 bis etwa 4 mm und/oder Leichtzuschläge umfassen.

Als mineralisches Bindemittel wird vornehmlich Zement eingesetzt, es können jedoch auch andere mineralische Bindemittel zum Einsatz kommen.

Zusätzlich können in der Schallabsorptionsschicht 5 auch textile Fasern als Kurz-, Lang-oder Endlosfasern oder in Form von einem Gewebe oder Gewirke zur Erhöhung der Biegezugfestigkeit der Schallabsorptionsschicht 5 eingebunden sein. Ferner sind weitere Zusatzmittel zur Verbesserung der betontechnologischen Eigenschaften sowohl in der Tragschicht 6 als auch in der Schallabsorptionsschicht 5 möglich.

Wie in Fig. 2 schematisch dargestellt, verteilen sich die mineralischen Zuschläge 12 sowie der das Gummigranulat 2 enthaltende Zuschlagstoff 1 gleichmäßig in dem Material der Schallabsorptionsschicht 5, wobei beide Materialien aufgrund ihrer mineralisierten bzw. mineralischen Oberflächen eine gute Einbindung in das mineralische Material 9 der Schallabsorptionsschicht 5 erlauben. Bedingt durch das im Kern des Zuschlagstoffes 1 befindliche Gummigranulat 2 werden die betontechnischen Eigenschaften der Schallabsorptionsschicht 5 deutlich verbessert. Insbesondere zeigt die Schallabsorptionsschicht 5 eine deutlich verringerte Rissbildung im Vergleich zu anderen bekannten Schallabsorptions- bzw. Schalldämmvorsatzschalen auf Betontragschichten. Ferner ergibt sich durch die Verwendung des mineralisch beschichteten Gummigranulats 2 eine Erhöhung der Dauerhaftigkeit, eine enorme Steigerung des Widerstandes gegenüber Frost-Taumittel-Beanspruchung der Lärmschutzeinrichtung 10, eine Verbesserung der Elastizität, ein verbesserter Anprallschutz durch die Elastizität des Gummigranulats 2, eine Erhöhung der Stoßdämpfung, eine sehr gute Steinwurfresistenz, eine sehr gute Haftverbundfestigkeit, eine gute Schallabsorption sowie eine sehr gute Schalldämmung. Darüber hinaus können temperaturbedingte Spannungen im Beton durch die Elastizität des eingesetzten Gummigranulats 2 ausgeglichen werden.

Die Struktur aus Fig. 2 kann folgendermaßen hergestellt werden: Zunächst wird das Gummigranulat 2 beispielsweise aus Altreifen, vorzugsweise aus Lkw-Altreifen, in Korngrößen von etwa 2 mm bis etwa 7 mm hergestellt. Das Gummigranulat 2 wird daraufhin in einen Mischer, beispielsweise einen Betonmischer, eingebracht. Dort wird dem Gummigranulat 2 ein polymeres Bindemittel, wie beispielsweise Polyurethan, in flüssiger Form zugegeben. Das polymere Bindemittel läuft gleichmäßig in dem Mischer um die Gummipartikel des Gummigranulats 2. Die Gummipartikel werden solange mit dem eingebrachten polymeren Bindemittel in dem Mischer durchmischt, bis alle Gummipartikel des Gummigranulats 2 mit dem polymeren Bindemittel benetzt sind. Danach kann eine Zugabe von Wasser erfolgen, um die Vernetzungsreaktion des polymeren Bindemittels zu beschleunigen. Die Wassermenge wird dabei in Abhängigkeit von der bestehenden Luftfeuchte gewählt. Wenn die Vernetzungsreaktion, d.h. die Erhärtungsreaktion des polymeren Bindemittels bzw. Polyurethans, gestartet ist, wird in den Mischer Gesteinsmehl hinzugegeben. Die Vernetzungsreaktion muss bereits begonnen haben, darf jedoch noch keineswegs abgeschlossen sein.

Die Menge an zugegebenem Gesteinsmehl ist so auszuwählen, dass eine vollständige Umhüllung des Gummigranulats 2 gewährleistet wird, aber keine lose Steinmehlmischung in dem Mischer verbleibt. Das Gesteinsmehl wird vorzugsweise chargenweise in den Mischer eingebracht, um ein genaues Dosieren und ein arbeitsschutzgerechtes Arbeiten bei geringer Staubentwicklung zu ermöglichen.

Das Gemisch aus Gummigranulat 2, dem daran gebundenen polymeren Bindemittel und dem zugegebenen Gesteinsmehl wird solange gemischt, bis ein rieselfähiges, mineralisch beschichtetes Gummigranulat bzw. der in Fig. 1 schematisch dargestellte Zuschlagstoff 1 entsteht.

Zur Herstellung der Schallabsorptionsschicht 5 werden das oberflächenmineralisierte Gummigranulat bzw. der Zuschlagstoff 1, mineralische Zuschläge 12 und Zement mit Wasser gemischt. Das Mischen erfolgt ähnlich wie bei einem Betonmischvorgang, jedoch intensiver und länger. Damit wird vermieden, dass sich der erfindungsgemäße Zuschlagstoff 1 entmischt. Im Ergebnis wird eine homogene Verteilung des Zuschlagstoffs 1 und der mineralischen Zuschläge 12 in dem Beton 9 der Schallabsorptionsschicht 5 erreicht.

Das Materialgemisch wird in eine Form bzw. Schalung eingebracht. Die Form kann eine Profilierung aufweisen, so dass die Schallabsorptionsschicht 5 beispielsweise mit einer trapez- oder wellenförmigen Oberfläche, je nach geforderter Schallabsorption, zur Verfügung gestellt werden kann.

Nachfolgend erfolgt eine Verdichtung der Materialmischung durch Vibration und Druck, beispielsweise durch Anwendung einer Rüttelplatte.

Daraufhin wird in einer Nass-in-nass-Technologie die Tragbetonschicht 6 auf die Schallabsorptionsschicht 5 aufgebracht. Hierfür werden zunächst Abstandshalter und die Bewehrung 8 in die Form eingebracht. Dann wird der Beton für die Tragbetonschicht 6 lose in die Form eingefüllt. Abschließend wird auch die Tragbetonschicht 6 verdichtet.

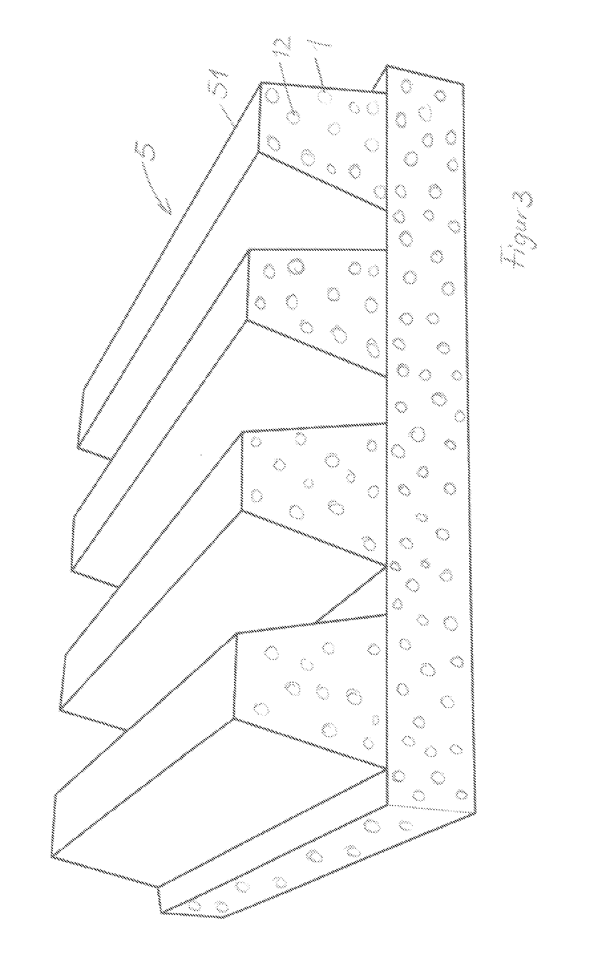

Fig. 3 zeigt schematisch die Schallabsorptionsschicht 5 der Lärmschutzeinrichtung 10 aus Fig. 2 in einer perspektivischen geschnittenen Seitenansicht. Hierbei ist nochmals deutlich das trapezförmige Profil der Oberfläche 51 der Schallabsorptionsschicht 5 erkennbar, wodurch eine besonders gute Schallabsorption und Schalldämmung erreichbar ist.

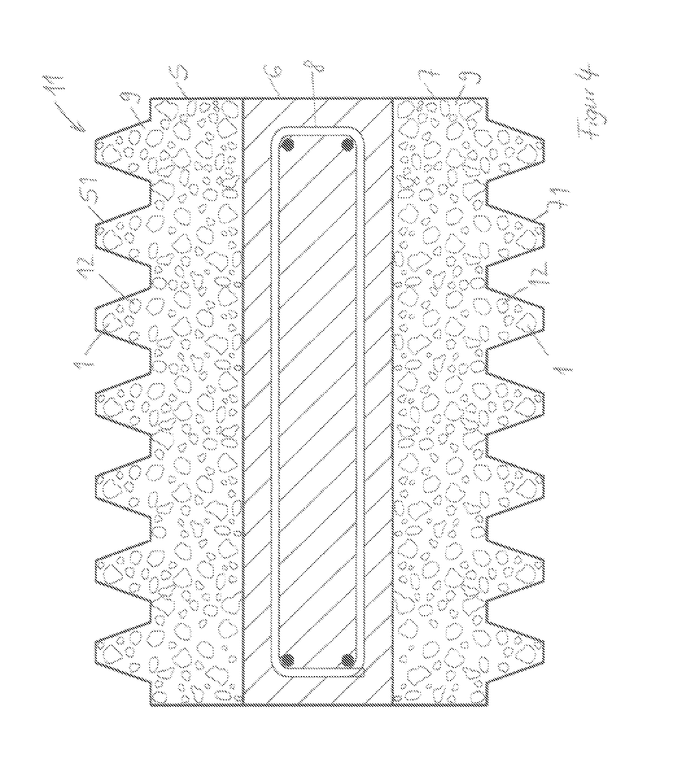

Fig. 4 zeigt schematisch eine weitere mögliche Ausführungsform einer erfindungsgemä-βen Lärmschutzeinrichtung 11. Die Lärmschutzeinrichtung 11 ist ebenso wie die Lärmschutzeinrichtung 10 aus Fig. 2 ein Lärmschutzwandsystem, welches hier jedoch aus einer zwischen zwei Schallabsorptionsschichten 5, 7 eingebetteten Tragschicht 6 ausgebildet ist. Die Tragschicht 6 aus Fig. 4 weist die gleichen Eigenschaften wie die Tragschicht 6 aus Fig. 2 auf, weshalb hier auf die oben gemachten Ausführungen zu der Tragschicht 6 verwiesen wird. Ebenso ist jede der Schallabsorptionsschichten 5, 7 ähnlich wie die Schallabsorptionsschicht 5 der Lärmschutzeinrichtung 10 aus Fig. 2 ausgebildet, weshalb auch hier auf die obigen Ausführungen hierzu verwiesen wird.

Ebenso wie die in Fig. 2 dargestellte Lärmschutzeinrichtung 10 wird die Lärmschutzeinrichtung 11 aus Fig. 4 vorzugsweise in einer Nass-in-nass-Technologie hergestellt. Hierfür wird auf ähnliche Weise, wie oben zu Fig. 2 beschrieben, vorgegangen. Die weitere Schallabsorptionsschicht 7 wird dabei schließlich Nass-in-nass auf die Tragbetonschicht 6 aufgebracht. Auch die Lärmschutzeinrichtung 11 zeigt gegenüber herkömmlichen Lärmschutzvorrichtungen deutlich verbesserte Eigenschaften durch die Einbindung des mineralisierten elastischen Gummigranulats 2 und dessen optimale Einbindung in den Beton 9 der Schallabsorptionsschichten 5 und 7. Der schichtenweise Aufbau der Lärmschutzeinrichtung 11 erlaubt zudem eine besonders einfache Herstellung der Lärmschutzeinrichtung 11, wobei zahlreiche Modifikationen hinsichtlich der Schichtfolge, der Oberflächenprofilierung, der Schichtdicke usw. der Lärmschutzeinrichtung 11, je nach geforderter Schallabsorption, möglich sind.

## Patentansprüche

1. Zuschlagstoff (1) für die Ausbildung einer Schallabsorptionsschicht (5, 7) einer Lärmschutzeinrichtung (10, 11) mit einer aus bewehrtem oder unbewehrtem Beton ausgebildeten Tragschicht (6), wobei auf der Tragschicht (6) wenigstens eine Schallabsorptionsschicht (5, 6) vorgesehen ist, und wobei die Schallabsorptionsschicht (5, 6) aus wenigstens einem mineralischen Bindemittel, mineralischen Zuschlägen (12) und einem Zuschlagstoff (1) aus einem hochpolymeren, elastischen, oberflächenmineralisierten Material ausgebildet ist,
**dadurch gekennzeichnet,**
**dass** der Zuschlagstoff (1) aus einem Gummigranulat (2) ausgebildet ist, auf dem direkt eine das Gummigranulat (2) umhüllende Hüllschicht (2), die aus einem polymeren Bindemittel ausgebildet ist, das aus der Gruppe der Acrylatharze, einem polyurethan- oder epoxidhaltigen Bindemittel oder einer Mischung daraus ausgewählt ist, und eine auf der Hüllschicht (2) vorgesehene mineralische Beschichtung (4) vorgesehen ist, wobei die mineralische Beschichtung (4) ein nicht in einer chemischen Reaktion mit Wasser aushärtendes Gesteinsmehl mit einer Korngröße im µm-Bereich ist, das während des Erhärtens der Hüllschicht (2) an diese angebunden ist.

2. Zuschlagstoff nach Anspruch 1, **dadurch gekennzeichnet, dass** das Gummigranulat (2) aus recycelten Altreifen ausgebildet ist.

3. Zuschlagstoff nach Anspruch 2, **dadurch gekennzeichnet, dass** die Altreifen Lkw-Altreifen sind.

4. Zuschlagstoff nach einem der vorhergehenden Ansprüche, **dadurch gekennzeichnet, dass** das Gummigranulat (2) eine durchschnittliche Korngröße von etwa 2 mm bis 7 mm aufweist.

5. Zuschlagstoff nach einem der vorhergehenden Ansprüche, **dadurch gekennzeichnet, dass** die Hüllschicht (3) eine Schichtdicke (s) von 50 µm bis 200 µm aufweist.

6. Lärmschutzeinrichtung (10, 11) mit einer aus bewehrtem oder unbewehrtem Beton ausgebildeten Tragschicht (6), wobei auf der Tragschicht (6) wenigstens eine Schallabsorptionsschicht (5, 6) vorgesehen ist, und wobei die Schallabsorptionsschicht (5, 6) aus wenigstens einem mineralischen Bindemittel, mineralischen Zuschlägen (12) und einem Zuschlagstoff (1) aus einem hochpolymeren, elastischen, oberflächenmineralisierten Material ausgebildet ist,
**dadurch gekennzeichnet,**
**dass** der Zuschlagstoff (1) ein Zuschlagstoff (1) nach einem der Ansprüche 1 bis 5 ist.

7. Lärmschutzeinrichtung nach Anspruch 6, **dadurch gekennzeichnet, dass** die mineralischen Zuschläge (12) Kies und/oder Sand in Korngrößen bis 4 mm und/oder Leichtzuschläge umfassen.

8. Lärmschutzeinrichtung nach einem der Ansprüche 6 oder 7, **dadurch gekennzeichnet, dass** das mineralische Bindemittel Zement ist.

9. Lärmschutzeinrichtung nach einem der Ansprüche 6 bis 8, **dadurch gekennzeichnet, dass** in der Schallabsorptionsschicht (5, 7) textile Fasern vorgesehen sind.

10. Lärmschutzeinrichtung nach einem der Ansprüche 6 bis 9, **dadurch gekennzeichnet, dass** beidseitig der Tragschicht (6) Schallabsorptionsschichten (5, 7) vorgesehen sind.

11. Lärmschutzeinrichtung nach einem der Ansprüche 6 bis 10, **dadurch gekennzeichnet, dass** die Schallabsorptionsschicht (5, 7) eine profilierte Oberfläche (51, 71) aufweist.

12. Lärmschutzeinrichtung nach Anspruch 11, **dadurch gekennzeichnet, dass** die Oberfläche (51, 71) ein trapezförmiges oder wellenförmiges Profil aufweist.
